# NEUE EUROPÄISCHE PATENTSCHRIFT

(11) **EP 2 641 477 B2**
(45) Veröffentlichungstag und Bekanntmachung des Hinweises auf die Entscheidung über den Einspruch: **08.06.2022**
(45) Hinweis auf die Patenterteilung: 15.07.2015
(21) Anmeldenummer: 12160230.4
(22) Anmeldetag: 19.03.2012
(51) Int. Cl.: A23L 29/30, A23L 29/212, A23L 29/00, A23L 27/00, A23L 27/20, A23F 3/30

(54) **Stoffgemische**
Compositions of matter
Compositions de matière

(43) Veröffentlichungstag der Anmeldung: 25.09.2013
(73) Patentinhaber: Symrise AG, 37603 Holzminden (DE)
(72) Erfinder: Schölling, Kilian, 58135 Hagen (DE); Muche, Sylvia, 37696 Marienmünster (DE)
(74) Vertreter: Eisenführ Speiser

(56) Entgegenhaltungen:
- EP-A1- 2 008 530
- EP-A1- 2 196 099
- EP-A1- 2 201 956
- EP-A1- 2 422 629
- WO-A1-2007/059953
- WO-A1-2008/025560
- WO-A1-2008/046857
- WO-A1-2011/109764
- WO-A1-2011/127039
- WO-A1-2011/146443
- WO-A1-2012/061242
- WO-A2-2008/012089
- WO-A2-2011/030351
- WO-A2-2011/131990
- CA-A1- 2 516 678
- KR-A- 19980 022 922
- DATABASE WPI Week 200957 Thomson Scientific, London, GB; AN 2009-M79444 XP002682710, & CN 101 502 656 A (TIANJIN RUIPU BIOTECHNOLOGY CO LTD) 12. August 2009 (2009-08-12)
- "Brochure commerciale de ROQUETTE", New taste masking solution KLEPTOSE® Linecaps, 2011,
- PREIS M et al.: Electronic taste sensing system to evaluate taste masking properties of maltodextrins, 2011,
- Rocha G. A. et al: "Microcapsules of a Casein Hydrolysate: Production, Characterization, and Applfcation in Protein Bars"; Food Sci Tech-int 2009; 15(4): 407-413

## Beschreibung

### GEBIET DER ERFINDUNG

Die Erfindung befindet sich auf dem Gebiet der Aromastoffe und betrifft Stoffgemische aus Stärkederivaten und bestimmten Bitterstoffen (wie hierin beschrieben), Nahrungsmittel, die diese Stoffgemische enthalten, Verfahren zu deren Herstellung sowie die Verwendung der Stärkederivate zur Maskierung unerwünschter Geschmacksnoten.

### STAND DER TECHNIK

Gute Medizin ist bitter - diese einfache Formel entspricht nicht nur der Lebenserfahrung, sondern es ist eine Tatsache, dass viele natürliche Wirkstoffe zwar durchaus einen positiven Effekt auf den menschlichen Organismus haben, aber bitter und adstringierend schmecken. Ein typisches Beispiel stellt die Gruppe der Polyphenole, speziell der Proanthocyanidine und Catechine dar, die in so unterschiedlichen Pflanzen wie Litchis und grünem Tee, aber auch dem Rotklee zu finden sind. Die Stoffgruppen sind seit langem für ihre blutreinigende und blutdrucksenkende Wirkung bekannt und auch die Flüssig/Flüssig Extraktion der Wirkstoffe stellt keine besondere präparative Schwierigkeit dar. Dennoch ist es bislang kaum möglich, diese Stoffe Nahrungsmitteln als Zusätze beizumischen, da der unangenehme Geschmack auch durch Zusatz intensiver Süßungsmittel nicht überdeckt werden kann.

Gegenstand der internationalen Patentanmeldung WO 2006 085710 A1 (Amorepacific) ist ein Verfahren zur Herstellung von granuliertem Grünen Tee Pulver, bei dem man als Binder geringe Mengen unterschiedlichster Substanzen, darunter auch Catechine und Maltodextrine einsetzt. Über eine Geschmacksverbesserung wird in der Schrift nicht berichtet.

Die internationale Patentanmeldung WO 2008 059609 A1 (Kao) offenbart die Reduktion von Bitterkeit und Adstringenz von nicht-polymerisierten Catechinen in Getränken durch Zugabe von Süßungsmitteln wie Thaumatin, Glycyrrhin, Sorbitol oder Erythritol.

Aus der internationalen Patentanmeldung WO 2011 141350 A1 (Unilever) ist bekannt, dass der Zusatz von wasserlöslichem Gummi arabicum oder Pektinen die Bitterkeit und Adstringenz von Catechinen in Getränken vermindert.

Die Europäische Patentanmeldung EP 1959754 A1 (Coca Cola) schlägt eine ternäre Süßstoffmischung vor, die unter anderem Kohlenhydrate und Hydratationsprodukte beinhalten. Unter vielen anderen werden als geeignete Kohlenhydrate auch Maltodextrine genannt, als Hydratationsprodukte kommen u.a. auch Flavanole und Flavanale in Betracht. Kombinationen beider Stoffgruppen werden indes nicht offenbart,

Des Weiteren beschreibt die US 8,003,150 (Kraft) die Herstellung und Anwendung von Flavonoiden, welche mit Glucose, Galactose oder weiteren reduzierenden Zuckern addierten werden. Durch die Addition des Zuckers an die Flavonoide wird die Bitterkeit und Adstringenz reduziert.

Gegenstand der japanischen Patentanmeldung JP 2008 118873 A1 (Taiyo) ist die Geschmacksverbesserung von Getränken mit grünem Tee-Extrakt durch Zugabe von hochverzweigten zyklischen Dextrinen

Die japanische Patentanmeldung JP 08 298930 A1 beschreibt darüber hinaus ein Verfahren, bei welchem zu einem Teeextrakt oder einem Teegetränk ein Dextrin, Cyclodextrin und/oder Stärke sowie das Enzym Cyclomaltodextringlucanotransferase zugegeben wird. Nach Einwirkung des Enzyms ist eine Reduktion der Bitterkeit und Adstringenz wahrzunehmen.

Schließlich sind aus der Chinesischen Patentanmeldung CN 101103753 A1 (Anhui Fuyang) feste Teezubereitungen bekannt, die neben PVP und Magnesiumstearat, auch Catechine sowie Maltodextrin enthalten. Die Zubereitungen zeichnen sich dadurch aus, dass sie gegen Bluthochdruck wirksam sind. Über eine Geschmacksverbesserung wird nicht berichtet.

Aus der EP 2196099 A1 (MARZULLO) sind Nahrungsmittelzubereitungen bekannt, die Maltodextrin, Arginin, omega-ungesättigte Fettsäuren, Kollagen, Vitamine und Zinksalze enthalten. Eingesetzt werden die Zubereitungen zur Wundbehandlung "von innen". Beispiel 1 offenbart eine Zubereitung, die 2,84 g Maltodextrin und 2 g Arginin enthält und das Verhältnis Stärkederivat:Bitterstoff 1,42:1 beträgt.

Die WO 2007 059953 A1 (SÜDZUCKER) beschäftigt sich mit der Maskierung von unerwünschten Geschmäcken von Polyphenolen mit Hilfe von Isomaltulose. Rezeptur 1 enthält neben Maltodextrin Koffein als Bitterstoff sowie eine Polyphenolmischung mit der Bezeichnung TEVIGO. Nimmt man die Menge an Maltodextrin (und Polyphenol+Koffein zusammen ergibt sich ein Gewichtsverhältnis von 96:1.

Aus der WO 2011 030351 A2 (RUBICON) ist der Einsatz von Cyclodextrinen zur Maskierung der schlechten Geschmackseigenschaften verschiedener pharmazeutischer Wirkstoffe bekannt.

Die Aufgabe der vorliegenden Erfindung hat somit darin bestanden, Stoffgemische zur Verfügung zu stellen, die Bitterstoffe, speziell Polyphenole und insbesondere Catechine zusammen mit einem physiologisch zulässigen Maskierungsstoff enthalten, so dass die Gemische einen neutralen Geschmack aufweisen. Des Weiteren hat die Anforderung darin bestanden, dass die Stoffgemische hinreichend wasserlöslich sind, um eine einfache Einarbeitung in flüssige Zubereitungen, wie beispielsweise Getränke und insbesondere Instantteegetränke zu gewährleisten.

### BESCHREIBUNG DER ERFINDUNG

Gegenstand der Erfindung sind Stoffgemische, enthaltend
(a) mindestens ein Stärkederivat ausgewählt aus der Gruppe, die gebildet wird von hochamylosehaltigen Stärken, Dextrinen, Maltodextrinen sowie deren Gemischen,
(b) mindestens einen Bitterstoff ausgewählt aus der Gruppe, die gebildet wird von Xanthinen, phenolische Glycosiden, Flavonoidglycosiden, Chalconen, Chalconglycosiden und Dihydrochalconglycosiden, hydrolysterbaren oder nicht hydrolysterbaren Tanninen, Flavonen und deren Glycosiden, Kaffeesäure und deren Estern, terpenoiden Bitterstoffen, Arminosäuren, Peptiden und Metallsalzen sowie deren Gemischen, sowie gegebenenfalls
(c) Stabilisierungsmittel,
die sich dadurch auszeichnen, dass sie die Komponenten (a) und (b) im Gewichtsverhältnis 1000:1 bis 200:1 vorliegen.

Überraschenderweise wurde gefunden, dass durch den Zusatz von speziellen Stärkederivaten, insbesondere Dextrinen und speziell Maltodextrinen in gewichtsmäßigem Überschuss, die adstringierenden und bitteren Geschmackseigenschaften von Bitterstoffen, insbesondere von Catechinen neutralisiert werden. Die Stoffgemische bilden Komplex- bzw. Einschlussverbindungen, die unerwarteter Weise nicht ausfallen, sondern wasserlöslich sind, so dass sie in vielfältiger Weise eingesetzt werden können. Durch die Zugabe von Stabilisatoren wie etwa Ascorbaten oder Benzoaten können die wässrigen Lösungen zusätzlich stabilisiert und die Viskosität in gewünschter Weise eingestellt werden.

### STÄRKEDERIVATE

Stärkederivate, die als Komponente a in Betracht kommen, sind erfindungsgemäß ausgewählt aus der Gruppe, die gebildet wird von hochamylosehaltigen Stärken, Dextrinen, Maltodextrinen sowie deren Gemischen. Unter hochamylosehaltigen Stärken sind Stärken mit einem Amylosegehalt von mindestens 70 Gew.-% zu verstehen, wie beispielsweise Markerbsen-Stärke (70 % Amylose) und Amylomais-Stärke (>50 % Amylose). Dextrine stellt eine Sammelbezeichnung für verschiedene niedere und höhere Polymere aus D-Glucose-Einheiten der allgemeinen Formel (C₆H₁₀O₅)ₙ * x H₂O, dar, die bei unvollständiger Hydrolyse von Stärke entstehen. Unter den Stärkederivaten besonders bevorzugt sind indes Maltodextrine, speziell nicht-zyklische Verbindungen, die durch enzymatischen und/oder thermischen Abbau von Stärke gewonnen werden und wasserlösliche oder teilweise wasserlösliche Kohlenhydrate darstellen. Sie bestehen aus Glucose-Einheiten und besitzen Dextrose-Äquivalente (DE) von unter 20, vorzugsweise 5 bis 15.

### BITTERSTOFFE

Ein besonderer Vorteil der vorliegenden Erfindung besteht darin, dass die Stärkederivate, speziell die Maltodextrine in der Lage sind, den Geschmack sehr vieler sehr unterschiedlicher Bitterstoffe zu maskieren. Zu den Bitterstoffen, die im Sinne der vorliegenden Erfindung Verwendung finden können, zählen die folgenden Gruppen:
- Xanthine, wie beispielsweise Coffein, Theobromin oder Theophyllin;
- phenolische Glycoside, wie beispielsweise Chinin, Salicin oder Arbutin;
- Flavanoidglycoside, wie beispielsweise Neohesperedin, Eriocitrin, Neoeriocitrin, Narirutin, Hesperidin oder Naringin;
- Chalcone, Chalconglycoside und Dihydrochalconglycoside, wie beispielsweise Phloridzin, Trilobatin;
- hydrolisierbare Tannine, wie beispielsweise Gallus- oder Ellagsäureester von Kohlenhydraten und insbesondere Pentagalloylglucose;
- nichthydrolisierbare Tannine, wie beispielsweise galloylierte Catechine oder Epicatechine und deren Oligomeren, insbesondere Proanthyocyanidine, Procyanidine und Thearubigenin;
- Flavone und deren Glycoside, wie beispielsweise Quercetin, Quercitrin, Procyanidin B2, Procyanidin B5, Procyanidin C1, Thearubigenin, Rutin, Taxifolin, Myricetin und Myrictrin;
- Kaffeesäure und deren Ester;
- terpenoide Bitterstoffe, wie beispielsweise Limonin, Nomilin, Lupolone und Homolone;
- pharmazeutische Wirkstoffe, wie beispielsweise Fluorchinolon-Antibiotika, Paracetamol, Aspirin, β-Lactam-Antibiotika, Ambroxol, Propylthiouracil [PROP], Guaifenesin);
- Aminosäuren, wie beispielsweise Leucin, Isoleucin, Valin, Tryptophan, Prolin, Histidin, Tyrosin, Lysin oder Phenylalanin;
- Peptide, insbesondere solche mit einer Aminosäure aus der Gruppe Leucin, Isoleucin, Valin, Tryptophan, Prolin oder Phenylalanin am N- oder C-Terminus; sowie
- Metallsalze, wie beispielsweise Kaliumchlorid, Natriumsulfat, Magnesiumsalze, Eisensalze, Aluminiumsalze und Zinksalze.

Unter den Bitterstoffen bevorzugt sind Catechin, Epicatechin, Epigallocatechingallat (EGCG), Gallocatechin, Gallocatechin-3-gallat, da der bittere und adstringierende Geschmack dieser Substanzen am besten durch die Stärkederivate und hier insbesondere durch die Maltodextrine überdeckt wird.

### STABILISIERUNGSMITTEL

Die Stabilisierungsmittel haben die Aufgabe, die wasserlöslichen Komplexe aus Stärkederivat und Bitterstoff in Lösung zu halten. Dies ist insbesondere dann empfehlenswert, wenn die Zubereitungen über einen längeren Zeitraum zumal bei höheren Temperaturen gelagert werden sollen. Durch Art und Menge der Stabilisatoren lässt sich zudem die Viskosität der Zubereitungen beeinflussen. Typische Beispiele von geeigneten Stabilisatoren sind Ascorbinsäure, Benzoesäure sowie deren physiologisch verträglichen Salze, wie beispielsweise Natriumascorbat oder Natriumbenzoat. Es können aber auch andere Salze organischer Säuren eingesetzt werden, sofern deren Verwendung als Zusatzstoff in Nahrungsmitteln zugelassen ist. Beispiele sind Ester der Zitronensäure, der Milchsäure oder der Weinsäure. Die Einsatzmenge der Stabilisatoren liegt typischerweise bei etwa 0,5 bis 2,5, vorzugsweise etwa 1 bis 2,0 und insbesondere ungefähr 1 Gew.-% - bezogen auf die fertige Zubereitung.

### BEVORZUGTE STOFFGEMISCHE

Wie schon oben erläutert, stellt die Kombination aus Maltodextrinen und Catechinen eine bevorzugte Ausführungsform der Erfindung dar, da hier der Effekt der Geschmacksmaskierung am deutlichsten ausfällt. Demzufolge sind die Stoffgemische bevorzugt, bei denen die Stärkederivate Maltodextrine darstellen und die Bitterstoffe ausgewählt sind aus der Gruppe, die gebildet wird von Catechin, Epicatechin, Epigallocatechingallat (EGCG), Gallocatechin, Gallocatechin-3-gallat sowie deren Gemischen.

Naturgemäß gibt es eine untere Grenze, ab der die Stärkederivate nicht mehr in der Lage sind, die Geschmacksnote der Bitterstoffe zu maskieren. Dies ist dann der Fall, wenn die Bitterstoffe mengenmäßig überwiegen. Vorzugsweise liegen die Komponenten (a) und (b) im Gewichtsverhältnis von etwa 1.000:1 bis 500:1 vor.

In einer weiteren bevorzugten Ausführungsform der Erfindung, weisen die Zubereitungen einen Wassergehalt von weniger als 2 Gew.-% auf. Dies wird erreicht, indem man die Stoffgemische, die in aller Regel herstellungsbedingt als wässrige Lösungen vorliegen, bis zur Trockne entwässert, beispielsweise durch Abtrennung des Wassers am Rotationsverdampfung, Lyophilisierung oder vorzugsweise durch Sprühtrocknung. Besonders bevorzugt sind dabei solche Stoffgemische die wasserfrei sind und dann als Pulver oder Granulate vorliegen.

### HERSTELLVERFAHREN

Die erfindungsgemäßen Stoffgemische können nach unterschiedlichen, jedoch sehr ähnlichen Verfahren gewonnen werden:

In einer ersten Ausführungsform löst man den Bitterstoff in Wasser, gibt das Stärkederivat hinzu, rührt die Mischung intensiv und stellt gegebenenfalls die Viskosität durch Zugabe des Stabilisierungsmittels auf einen Wert von beispielsweise 10 bis 2.000 mPas (Brookfield RVT, 20 °C, Spindel 3) ein. Ein alternatives Verfahren besteht darin, dass man den Bitterstoff und den Stabilisator in Wasser löst, das Stärkederivat hinzugibt und die Mischung intensiv rührt. Ebenso ist es möglich, dass man den Bitterstoff, das Stärkederivat und den Stabilisator in wasserfreien Form vermischt und vermahlt, das Pulver in Wasser löst und die Mischung intensiv rührt.

Optional können die so erhaltenen wässrigen Lösungen wieder getrocknet und auf einen Restwassergehalt von maximal 2 Gew.-% Wasser eingestellt werden. Die bevorzugte Methode zur Entwässerung der Lösungen ist die Sprühtrocknung. Dabei werden je nach Verfahrensalternative Pulver oder Granulate erhalten, die in der Regel sogar völlig wasserfrei sind.

### GEWERBLICHE ANWENDBARKEIT

Die im Sinne der Erfindung zugänglichen Stoffgemische können Nahrungsmitteln zugesetzt werden. Ein weiterer Gegenstand der Erfindung betrifft daher eben solche Nahrungsmittel, die die erfindungsgemäßen Stoffgemische in Mengen von beispielsweise 1 bis 10 und vorzugsweise 2 bis 5 Gew.-% enthalten. Typische Beispiele sind Getränke, speziell Limonaden und Teegetränke, Sojaprodukte, Milchprodukte, insbesondere Joghurts, Backwaren, Säfte, Schokolade sowie Kaugummis und Bonbons.

Ein letzter Aspekt der Erfindung besteht in der Verwendung von Stärkederivaten ausgewählt aus der Gruppe, die gebildet wird von hochamylosehaltigen Stärken, Dextrinen, Maltodextrinen sowie deren Gemischen, speziell Maltodextrinen, zur Maskierung des bitteren und adstringierenden Geschmacks von Bitterstoffen, ausgewählt aus der Gruppe, die gebildet wird von Xanthinen, phenolische Glycosiden, Flavonoidglycosiden, Chalconen, Chalconglycosiden und Dihydrochalconglycosiden, hydrolysierbaren oder nicht hydrolisierbaren Tanninen, Flavonen und deren Glycosiden, Kaffeesäure und deren Estern, terpenoiden Bitterstoffen, Aminosäuren, Peptiden und Metallsalzen sowie deren Gemischen, insbesondere von Catechinen

### KAPSELN

Die erfindungsgemäßen Zubereitungen aus Stärkederivaten, Bitterstoffen und gegebenenfalls Stabilisatoren als solche, aber auch die damit konfektionierten Nahrungsmittel können auch in verkapselter Form vorliegen. Neben üblichen Makrokapseln auf Basis von Gelatine kommen dabei vor allem auch so genannte Mikro- oder Nanokapseln in Betracht. Darunter werden vom Fachmann sphärische Aggregate mit einem Durchmesser im Bereich von etwa 0,0001 bis etwa 5 und vorzugsweise 0,005 bis 0,5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, abermals Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon. Beispiele für Mikrokapseln des Stands der Technik sind folgende Handelsprodukte (in Klammern angegeben ist jeweils das Hüllmaterial) : *Hallcrest Microcapsules* (Gelatine, Gummi Arabicum), *Coletica Thalaspheres* (maritimes Collagen), *Lipotec Millicapseln* (Alginsäure, Agar-Agar), *Induchem Unispheres* (Lactose, mikrokristalline Cellulose, Hydroxypropylmethylcellulose); *Unicerin C30* (Lactose, mikrokristalline Cellulose, Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres* (Phospholipide) sowie *Primaspheres* und *Primasponges* (Chitosan, Alginate) und *Primasys* (Phospholipide). Besonders interessant für die Verkapselung von Zubereitungen für kosmetische Anwendungen sind Koazervate von kationischen Polymeren, insbesondere von Chitosan, mit anioniscchen polymeren, speziell Alginaten. Entsprechende Verfahren sind beispielsweise in den Druckschriften WO 2001 001926 A1, WO 2001 001927 A1, WO 2001 001928 A1 und WO 2001 001929 A1 (Cognis) beschrieben.

### Gelbildner

Mikrokapseln enthalten die Wirkstoffe häufig in einer Gelphase gelöst oder dispergiert. Als Gelbildner werden vorzugsweise solche Stoffe in Betracht gezogen, welche die Eigenschaft zeigen in wässriger Lösung bei Temperaturen oberhalb von 40 °C Gele zu bilden. Typische Beispiele hierfür sind Heteropolysaccharide und Proteine. Als thermogelierende Heteropolysaccharide kommen vorzugsweise Agarosen in Frage, welche in Form des aus Rotalgen zu gewinnenden Agar-Agar auch zusammen mit bis zu 30 Gew.-% nichtgelbildenden Agaropektinen vorliegen können. Hauptbestandteil der Agarosen sind lineare Polysaccharide aus D-Galaktose und 3,6-Anhydro-L-galaktose, die alternierend β-1,3- und β-1,4-glykosidisch verknüpft sind. Die Heteropolysaccharide besitzen vorzugsweise ein Molekulargewicht im Bereich von 110.000 bis 160.000 und sind sowohl farb- als auch geschmacklos. Als Alternativen kommen Pektine, Xanthane (auch Xanthan Gum) sowie deren Mischungen in Frage. Es sind weiterhin solche Typen bevorzugt, die noch in 1-Gew.%iger wässriger Lösung Gele bilden, die nicht unterhalb von 80 °C schmelzen und sich bereits oberhalb von 40 °C wieder verfestigen. Aus der Gruppe der thermogelierenden Proteine seien exemplarisch die verschiedenen Gelatine-Typen genannt.

### Kationpolymere

Geeignete kationische Polymere sind beispielsweise kationische Cellulosederivate, wie z.B. eine quaternierte Hydroxyethylcellulose, die unter der Bezeichnung Polymer JR 400^{®} von Amerchol erhältlich ist, kationische Stärke, Copolymere von Diallylammoniumsalzen und Acrylamiden, quaternierte Vinylpyrrolidon/Vinylimidazol-Polymere, wie z.B. Luviquat^{®} (BASF), Kondensationsprodukte von Polyglycolen und Aminen, quaternierte Kollagenpolypeptide, wie beispielsweise Lauryldimonium Hydroxypropyl Hydrolyzed Collagen (Lamequat^{®}L/Grünau), quaternierte Weizenpolypeptide, Polyethylenimin, kationische Siliconpolymere, wie z.B. Amodimethicone, Copolymere der Adipinsäure und Dimethylaminohydroxypropyldiethylentriamin (Cartaretine^{®}/Sandoz), Copolymere der Acrylsäure mit Dimethyldiallylammoniumchlorid (Merquat^{®} 550/Chemviron), Polyaminopolyamide sowie deren vernetzte wasserlöslichen Polymere, kationische Chitinderivate wie beispielsweise quaterniertes Chitosan, gegebenenfalls mikrokristallin verteilt, Kondensationsprodukte aus Dihalogenalkylen, wie z.B. Dibrombutan mit Bisdialkylaminen, wie z.B. Bis-Dimethylamino-1,3-propan, kationischer Guar-Gum, wie z.B. Jaguar^{®} CBS, Jaguar^{®} C-17, Jaguar^{®} C-16 der Firma Celanese, quaternierte Ammoniumsalz-Polymere, wie z.B. Mirapol^{®} A-15, Mirapol^{®} AD-1, Mirapol^{®} AZ-1 der Firma Miranol. Vorzugsweise wird als Verkapselungsmaterial Chitosan eingesetzt. Chitosane stellen Biopolymere dar und werden zur Gruppe der Hydrokolloide gezählt. Chemisch betrachtet handelt es sich um partiell deacetylierte Chitine unterschiedlichen Molekulargewichtes, die den folgenden - idealisierten - Monomerbaustein enthalten:

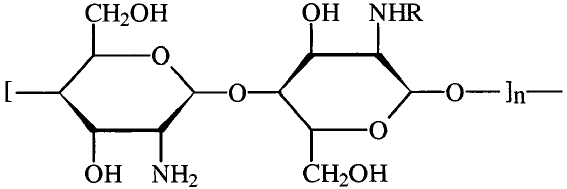

Im Gegensatz zu den meisten Hydrokolloiden, die im Bereich biologischer pH-Werte negativ geladen sind, stellen Chitosane unter diesen Bedingungen kationische Biopolymere dar. Die positiv geladenen Chitosane können mit entgegengesetzt geladenen Oberflächen in Wechselwirkung treten und werden daher in kosmetischen Haar- und Körperpflegemitteln sowie pharmazeutischen Zubereitungen eingesetzt. Zur Herstellung der Chitosane geht man von Chitin, vorzugsweise den Schalenresten von Krustentieren aus, die als billige Rohstoffe in großen Mengen zur Verfügung stehen. Das Chitin wird dabei in einem Verfahren, das erstmals von Hackmann et al. beschrieben worden ist, üblicherweise zunächst durch Zusatz von Basen deproteiniert, durch Zugabe von Mineralsäuren demineralisiert und schließlich durch Zugabe von starken Basen deacetyliert, wobei die Molekulargewichte über ein breites Spektrum verteilt sein können. Vorzugsweise werden solche Typen eingesetzt, wie die ein durchschnittliches Molekulargewicht von 10.000 bis 500.000 bzw. 800.000 bis 1.200.000 Dalton aufweisen und/oder eine Viskosität nach Brookfield (1 Gew.-%ig in Glycolsäure) unterhalb von 5000 mPas, einen Deacetylierungsgrad im Bereich von 80 bis 88 % und einem Aschegehalt von weniger als 0,3 Gew.-% besitzen. Aus Gründen der besseren Wasserlöslichkeit werden die Chitosane in der Regel in Form ihrer Salze, vorzugsweise als Glycolate eingesetzt.

### Anionpolymere

Die anionischen Polymere haben die Aufgabe, mit den kationischen Membranen zu bilden. Für diesen Zweck eignen sich vorzugsweise Salze der Alginsäure. Bei der Alginsäure handelt es sich um ein Gemisch carboxylgruppenhaltiger Polysaccharide mit folgendem idealisierten Monomerbaustein:

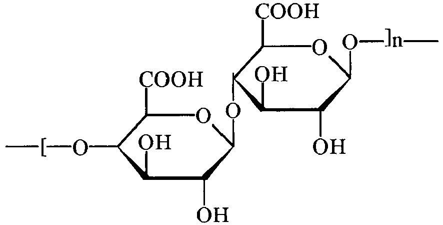

Das durchschnittliche Molekulargewicht der Alginsäuren bzw. der Alginate liegt im Bereich von 150.000 bis 250.000. Dabei sind als Salze der Alginsäure sowohl deren vollständige als auch deren partiellen Neutralisationsprodukte zu verstehen, insbesondere die Alkalisalze und hierunter vorzugsweise das Natriumalginat ("Algin") sowie die Ammonium- und Erdalkalisalze. besonders bevorzugt sind Mischalginate, wie z.B. Natrium/Magnesium- oder Natrium/Calciumalginate. In einer alternativen Ausführungsform der Erfindung kommen für diesen Zweck jedoch auch anionische Chitosanderivate, wie z.B. Carboxylierungs- und vor allem Succinylierungsprodukte in Frage. Alternativ kommen auch Poly(meth)acrylate mit durchschnittlichen Molekulargewichten im Bereich von 5.000 bis 50.000 Dalton sowie die verschiedenen Carboxymethylcellulosen in Frage. Anstelle der anionischen Polymeren können für die Ausbildung der Hüllmembran auch anionische Tenside oder niedermolekulare anorganische Salze, wie beispielsweise Pyrophosphate eingesetzt werden.

### Verkapselung

Zur Herstellung der Mikrokapseln stellt man üblicherweise eine 1 bis 10, vorzugsweise 2 bis 5 Gew.-%ige wässrige Lösung des Gelbildners, vorzugsweise des Agar-Agars her und erhitzt diese unter Rückfluss. In der Siedehitze, vorzugsweise bei 80 bis 100 °C, wird eine zweite wässrige Lösung zugegeben, welche das Kationpolymer, vorzugsweise das Chitosan in Mengen von 0,1 bis 2, vorzugsweise 0,25 bis 0,5 Gew.-% und den Wirkstoffen in Mengen von 0,1 bis 25 und insbesondere 0,25 bis 10 Gew.-% enthält; diese Mischung wird als Matrix bezeichnet. Die Beladung der Mikrokapseln mit Wirkstoffen kann daher ebenfalls 0,1 bis 25 Gew.-% bezogen auf das Kapselgewicht betragen. Falls gewünscht, können zu diesem Zeitpunkt zur Viskositätseinstellung auch wasserunlösliche Bestandteile, beispielsweise anorganische Pigmente zugegeben werden, wobei man diese in der Regel in Form von wässrigen oder wässrig/alkoholischen Dispersionen zusetzt. Zur Emulgierung bzw. Dispergierung der Wirkstoffe kann es ferner von Nutzen sein, der Matrix Emulgatoren und/oder Lösungsvermittler hinzuzugeben. Nach der Herstellung der Matrix aus Gelbildner, Kationpolymer und Wirkstoffen kann die Matrix optional in einer Ölphase unter starker Scherung sehr fein dispergiert werden, um bei der nachfolgenden Verkapselung möglichst kleine Teilchen herzustellen. Dabei hat es sich als besonders vorteilhaft erwiesen, die Matrix auf Temperaturen im Bereich von 40 bis 60 °C zu erwärmen, während man die Ölphase auf 10 bis 20 °C kühlt. Im letzten, nun wieder obligatorischen Schritt erfolgt dann die eigentliche Verkapselung, d.h. die Ausbildung der Hüllmembran durch Inkontaktbringen des Kationpolymers in der Matrix mit den anionischen Polymeren. Hierzu empfiehlt es sich, die gegebenenfalls in der Ölphase dispergierte Matrix bei einer Temperatur im Bereich von 40 bis 100, vorzugsweise 50 bis 60 °C mit einer wässrigen, etwa 1 bis 50 und vorzugsweise 10 bis 15 Gew.-%ige wässrigen Lösung des Anionpolymers zu behandeln und dabei - falls erforderlich - gleichzeitig oder nachträglich die Ölphase zu entfernen. Die dabei resultierenden wässrigen Zubereitungen weisen in der Regel einen Mikrokapselgehalt im Bereich von 1 bis 10 Gew.-% auf. In manchen Fällen kann es dabei von Vorteil sein, wenn die Lösung der Polymeren weitere Inhaltsstoffe, beispielsweise Emulgatoren oder Konservierungsmittel enthält. Nach Filtration werden Mikrokapseln erhalten, welche im Mittel einen Durchmesser im Bereich von vorzugsweise etwa 0,01 bis 1 mm aufweisen. Es empfiehlt sich, die Kapseln zu sieben, um eine möglichst gleichmäßige Größenverteilung sicherzustellen. Die so erhaltenen Mikrokapseln können im herstellungsbedingten Rahmen eine beliebige Form aufweisen, sie sind jedoch bevorzugt näherungsweise kugelförmig. Alternativ kann man die Anionpolymere auch zur Herstellung der Matrix einsetzen und die Verkapselung mit den Kationpolymeren, speziell den Chitosanen durchführen.

Alternativ kann die Verkapselung auch unter ausschließlicher Verwendung von Kationpolymeren erfolgen, wobei man sich deren Eigenschaft zu Nutze macht, bei pH-Werten oberhalb des pKs-Wertes zu koagulieren.

In einem zweiten alternativen Verfahren wird zur Herstellung der erfindungsgemäßen Mikrokapseln wird zunächst eine O/W-Emulsion zubereitet, welche neben dem Ölkörper, Wasser und den Wirkstoffen eine wirksame Menge Emulgator enthält. Zur Herstellung der Matrix wird diese Zubereitung unter starkem Rühren mit einer entsprechenden Menge einer wässrigen Anionpolymerlösung versetzt. Die Membranbildung erfolgt durch Zugabe der Chitosanlösung. Der gesamte Vorgang findet vorzugsweise im schwach sauren Bereich bei pH = 3 bis 4 statt. Falls erforderlich erfolgt die pH-Einstellung durch Zugabe von Mineralsäure. Nach der Membranbildung wird der pH-Wert auf 5 bis 6 angehoben, beispielsweise durch Zugabe von Triethanolamin oder einer anderen Base. Hierbei kommt es zu einem Anstieg der Viskosität, die durch Zugabe von weiteren Verdickungsmitteln, wie z.B. Polysacchariden, insbesondere Xanthan-Gum, Guar-Guar, Agar-Agar, Alginaten und Tylosen, Carboxymethylcellulose und Hydroxyethylcellulose, höhermolekularen Polyethylenglycolmono- und - diestern von Fettsäuren, Polyacrylaten, Polyacrylamiden und dergleichen noch unterstützt werden kann. Abschließend werden die Mikrokapseln von der wässrigen Phase beispielsweise durch Dekantieren, Filtrieren oder Zentrifugieren abgetrennt.

In einem dritten alternativen Verfahren erfolgt die Bildung der Mikrokapseln um einen vorzugsweise festen, beispielsweise kristallinen Kern, indem dieser schichtweise mit entgegengesetzt geladenen Polyelektrolyten eingehüllt wird. In diesem Zusammenhang sei auf das Europäische Patent EP 1064088 B1 (Max-Planck Gesellschaft) verwiesen.

### BEISPIELE

### HERSTELLBEISPIEL H1

In einem 250-ml-Becherglas wurden 60 g Maltodextrin DE10 unter starkem Rühren in ca. 38 ml Wasser bei 50°C gelöst. 0,75 g Epigallocatechingallat (EGCG) zugegeben und die Mischung weitere 30 min gerührt, bis eine klare Lösung entstand. Dieser wurden jeweils 0,5 g Ascorbinsäure und Natriumbenzoat zugegeben.

### HERSTELLBEISPIEL H2

In einem 250-ml-Becherglas wurden 0,5 g Ascorbinsäure, 0,5 g Natriumbenzoat und 0,5 g Epigallocatechingallat vorgelegt und in ca. 49 ml Wasser bei 50°C bei intensivem Rühren gelöst. Anschließend wurden 100 g Maltodextrin DE10 zugegeben und weitere 15 min gerührt, bis eine klare Lösung entstand.

### REFERENZ BEISPIELE 1 BIS 3, VERGLEICHSBEISPIEL V1

Die Verkostung wurde mit einem Produkt - hergestellt analog Beispiel H1 - durchgeführt. Es wurden jedoch Maltodextrine unterschiedlicher Herkunft eingesetzt. Die Intensität der Bitterkeit und Astringenz wurde von einem Panel bestehend aus 5 Personen ermittelt und auf einer Skala von 0 (kein Eindruck) bis 10 (sehr starker Eindruck) bewertet. Die Ergebnisse in Tabelle 1 stellen die Mittel von 5 Messreihen dar.

**Tabelle 1**

| Eindruck der Bitterkeit und Astringenz | | | | | |
|---|---|---|---|---|---|
| **Bsp.** | **Maltodextrin** | | **Epigallocatechingallat** | **Bitterkeit** | **Astringenz** |
| V1 | Ohne Maltodextrin | | 750 ppm | 10 | 9 |
| 1 | Maltodextrin aus Wachsmaisstärke | 50.000 ppm | 750 ppm | 5 | 4 |
| | | 100.000 ppm | 750 ppm | 2 | 1 |
| 2 | Maltodextrin aus Kartoffelstärke | 50.000 ppm | 750 ppm | 4 | 5 |
| | | 100.000 ppm | 750 ppm | 1 | 2 |
| 3 | Maltodextrin aus Tapiokastärke | 50.000 ppm | 750 ppm | 5 | 6 |
| | | 100.000 ppm | 750 ppm | 2 | 2 |

### REFERENZ BEISPIELE 4 BIS 6, VERGLEICHSBEISPIEL V2

Die Verkostung wurde mit einem Produkt - hergestellt analog Beispiel H1 - durchgeführt. Es wurden jedoch Dextrine unterschiedlicher Herkunft eingesetzt. Die Intensität der Bitterkeit und Astringenz wurde von einem untrainierten Panel bestehend aus 5 Personen ermittelt und auf einer Skala von 0 (kein Eindruck) bis 10 (sehr starker Eindruck) bewertet. Die Ergebnisse in Tabelle 2 stellen die Mittel von 5 Messreihen dar.

**Tabelle 2**

| Eindruck der Bitterkeit und Astringenz | | | | | |
|---|---|---|---|---|---|
| **Bsp.** | **Maltodextrin** | | **Coffein** | **Bitterkeit** | **Astringenz** |
| V2 | Ohne Maltodextrin | | 750 ppm | 8 | 7 |
| 4 | Dextrin aus Wachsmaisstärke | 50.000 ppm | 750 ppm | 7 | 6 |
| | | 100.000 ppm | 750 ppm | 6,5 | 6 |
| 5 | Dextrin aus Kartoffelstärke | 50.000 ppm | 750 ppm | 7 | ,5 |
| | | 100.000 ppm | 750 ppm | 6,5 | 6,5 |
| 6 | Dextrin aus Tapiokastärke | 50.000 ppm | 750 ppm | 7,5 | 6,5 |
| | | 100.000 ppm | 750 ppm | 7 | 6 |

### REFERENZ BEISPIEL 7

### Herstellung eines Instantteegetränks

0,75 g Epigallocatechingallat wurden in 1000 ml eines Instantteegetränks unter starkem Rühren vollständig aufgelöst. Anschließend wurden 100 g Maltodextrin DE10 zugegeben und die Mischung weitere 15 min intensiv gerührt.

## Patentansprüche

1. Stoffgemische, enthaltend
(a) mindestens ein Stärkederivat ausgewählt aus der Gruppe, die gebildet wird von hochamylosehaltigen Stärken, Dextrinen, Maltodextrinen sowie deren Gemischen,
(b) mindestens einen Bitterstoff ausgewählt aus der Gruppe, die gebildet wird von Xanthinen, phenolische Glycosiden, Flavanoidglycosiden, Chalconen, Chalconglycosiden und Dihydrochalconglycosiden, hydrolisierbaren oder nicht hydrolysierbaren Tanninen, Flavonen und deren Glycosiden, Kaffeesäure und deren Estern, terpenoiden Bitterstoffen, Aminosäuren, Peptiden und Metallsalzen sowie deren Gemischen, sowie gegebenenfalls
(c) Stabilisierungsmittel,
**dadurch gekennzeichnet, dass** die Komponenten (a) und (b) im Gewichtsverhältnis 1000:1 bis 200:1 vorliegen.

2. Stoffgemische nach Anspruch 1, **dadurch gekennzeichnet, dass** die Stabilisierungsmittel ausgewählt sind aus der Gruppe, die gebildet wird von Ascorbinsäure, Benzoesäure sowie deren physiologisch verträglichen Salzen.

3. Stoffgemische nach einem der Ansprüche 1 oder 2, **dadurch gekennzeichnet, dass** die Stärkederivate Maltodextrine darstellen und die Bitterstoffe ausgewählt sind aus der Gruppe, die gebildet wird von Catechin, Epicatechin, Epigallocatechingallat (EGCG), Gallocatechin, Gallocatechin-3-gallat sowie deren Gemischen.

4. Stoffgemische nach mindestens einem der Ansprüche 1 bis 3, **dadurch gekennzeichnet, dass** die Komponenten (a) und (b) im Gewichtsverhältnis 1000:1 bis 500:1 vorliegen.

5. Stoffgemische nach mindestens einem der Ansprüche 1 bis 4, **dadurch gekennzeichnet, dass** sie einen Wassergehalt von maximal 2 Gew.-% aufweisen.

6. Nahrungsmittel, enthaltend die Stoffgemische gemäß Anspruch 1.

7. Verfahren zur Herstellung von Stoffgemischen gemäß Anspruch 1, **dadurch gekennzeichnet, dass** man den Bitterstoff in Wasser löst, das Stärkederivat hinzugibt, die Mischung intensiv rührt und gegebenenfalls durch Zugabe des Stabilisierungsmittels auf eine geeignete Viskosität einstellt.

8. Verfahren zur Herstellung von Stoffgemischen gemäß Anspruch 1, **dadurch gekennzeichnet, dass** man den Bitterstoff und den Stabilisator in Wasser löst, das Stärkederivat hinzugibt und die Mischung intensiv rührt.

9. Verfahren zur Herstellung von Stoffgemischen gemäß Anspruch 1, **dadurch gekennzeichnet, dass** man den Bitterstoff, das Stärkederivat und den Stabilisator in wasserfreien Form vermischt und vermahlt, das Pulver in Wasser löst und die Mischung intensiv rührt.

10. Verfahren nach den Ansprüchen 7, 8 oder 9, **dadurch gekennzeichnet, dass** man die Lösungen bis auf einen Restgehalt von maximal 2 Gew.-% Wasser trocknet.

11. Verfahren nach Anspruch 10, **dadurch gekennzeichnet, dass** man die Lösungen einer Sprühtrocknung unterwirft.

12. Verwendung von Stärkederivaten ausgewählt aus der Gruppe, die gebildet wird von hochamylosehaltigen Stärken, Dextrinen, Maltodextrinen sowie deren Gemischen zur Maskierung des bitteren und adstringierenden Geschmacks von Bitterstoffen ausgewählt aus der Gruppe, die gebildet wird von Xanthinen, phenolische Glycosiden, Flavanoidglycosiden, Chalconen, Chalconglycosiden und Dihydrochalconglycosiden, hydrolisierbaren oder nicht hydrolysierbaren Tanninen, Flavonen und deren Glycosiden, Kaffeesäure und deren Estern, terpenoiden Bitterstoffen, Aminosäuren, Peptiden und Metallsalzen sowie deren Gemischen, im Gewichtsverhältnis Stärkederivat zu Bitterstoff von 1000:1 bis 200:1.

## Claims

1. A substance mixture, comprising
(a) at least one starch derivative selected from the group consisting of high-amylose starches, dextrins, maltodextrins and mixtures thereof,
(b) at least one bitter principle selected from the group consisting of xanthines, phenolic glycosides, flavonoid glycosides, chalcones, chalcone glycosides and dihydrochalcone glycosides, hydrolysable or non-hydrolysable tannins, flavones and glycosides thereof, caffeic acid and esters thereof, terpenoid bitter principles, amino acids, peptides and metal salts and mixtures thereof, and optionally
(c) stabilizers,
wherein the components (a) and (b) are present in a weight ratio of from 1000:1 to 200:1.

2. Substance mixtures according to claim 1, wherein the stabilizers are selected from the group consisting of ascorbic acid, benzoic acid and physiologically acceptable salts thereof.

3. Substance mixtures according to claim 1 or 2, wherein the starch derivatives are maltodextrins and the bitter principles are selected from the group consisting of catechin, epicatechin, epigallocatechin gallate (EGCG), gallocatechin, gallocatechin-3-gallate and mixtures thereof.

4. Substance mixtures according to at least one of claims 1 to 3, wherein the components (a) and (b) are present in a weight ratio of from 1000:1 to 500:1.

5. Substance mixtures according to at least one of claims 1 to 4, wherein they have a water content of a maximum of 2 % by weight.

6. A food composition comprising the substance mixtures of claim 1.

7. A process for the production of the substance mixtures according to claim 1, wherein the bitter principle is dissolved in water, the starch derivative is added, the mixture is vigorously stirred and optionally adjusted to a suitable viscosity by adding the stabilizer.

8. A process for the production of the substance mixtures according to claim 1, wherein the bitter principle and the stabilizer are dissolved in water, the starch derivative is added and the mixture is vigorously stirred.

9. A process for the production of the substance mixtures according to claim 1, wherein the bitter principle, the starch derivative and the stabilizer in water-free form are mixed and milled, the powder is dissolved in water and the mixture is vigorously stirred.

10. The process according to the claims 7, 8, or 9, wherein the solutions are dried until a residual water content of a maximum of 2% by weight is reached.

11. The process according to claim 10, wherein the solutions are subjected to spray-drying.

12. Use of starch derivatives selected from the group consisting of high-amylose starches, dextrins, maltodextrins and mixtures thereof to mask the bitter and astringent flavour of bitter principles selected from the group consisting of xanthines, phenolic glycosides, flavonoid glycosides, chalcones, chalcone glycosides and dihydrochalcone glycosides, hydrolysable or non-hydrolysable tannins, flavones and glycosides thereof, caffeic acid and esters thereof, terpenoid bitter principles, amino acids, peptides and metal salts and mixtures thereof, wherein the starch derivatives and bitter principles are present in a weight ratio of from 1000:1 to 200:1.

## Revendications

1. Mélanges de matières, contenant
(a) au moins un dérivé d'amidon choisi dans le groupe formé par les amidons à teneur élevée en amylose, les dextrines, les maltodextrines et leurs mélanges,
(b) au moins une matière amère choisie dans le groupe formé par les xanthines, les glycosides phénoliques, les glycosides de flavanoïdes, les chalcones, les glycosides de chalcones et les glycosides de dihydrochalcones, les tannins hydrolysables ou non hydrolysables, les flavones et leurs glycosides, l'acide caféique et ses esters, les matières amères terpénoïdes, les acides aminés, les peptides et les sels métalliques, ainsi que leurs mélanges, et éventuellement
(c) des stabilisateurs,
**caractérisés en ce que** les composants (a) et (b) sont présents en un rapport en poids de 1000:1 à 200:1.

2. Mélanges de matières selon la revendication 1, **caractérisés en ce que** les stabilisateurs sont choisis dans le groupe formé par l'acide ascorbique, l'acide benzoïque et leurs sels physiologiquement compatibles.

3. Mélanges de matières selon l'une quelconque des revendications 1 ou 2, **caractérisés en ce que** le dérivé d'amidon est la maltodextrine et la matière amère est choisie dans le groupe formé par la catéchine, l'épicatéchine, le gallate d'épigallocatéchine (EGCG), la gallocatéchine, le 3-gallate de gallocatéchine et leurs mélanges.

4. Mélanges de matières selon au moins l'une quelconque des revendications 1 à 3, **caractérisés en ce que** les composants (a) et (b) sont présents en un rapport en poids de 1000:1 à 500:1.

5. Mélanges de matières selon au moins l'une quelconque des revendications 1 à 4, **caractérisés en ce qu'**ils présentent une teneur en eau d'au plus 2 % en poids.

6. Produit alimentaire, contenant les mélanges de matières selon la revendication 1.

7. Procédé de fabrication de mélanges de matières selon la revendication 1, **caractérisé en ce que** la matière amère est dissoute dans de l'eau, le dérivé d'amidon est ajouté, le mélange est agité intensivement et une viscosité appropriée est éventuellement ajustée par ajout du stabilisateur.

8. Procédé de fabrication de mélanges de matières selon la revendication 1, **caractérisé en ce que** la matière amère et le stabilisateur sont dissous dans de l'eau, le dérivé d'amidon est ajouté et le mélange est agité intensivement.

9. Procédé de fabrication de mélanges de matières selon la revendication 1, **caractérisé en ce que** la matière amère, le dérivé d'amidon et le stabilisateur sont mélangés sous une forme anhydre et broyés, la poudre est dissoute dans de l'eau et le mélange est agité intensivement.

10. Procédé selon les revendications 7, 8 ou 9, **caractérisé en ce que** les solutions sont séchées jusqu'à une teneur résiduelle en eau d'au plus 2 % en poids.

11. Procédé selon la revendication 10, **caractérisé en ce que** les solutions sont soumises à un séchage par pulvérisation.

12. Utilisation de dérivés d'amidon choisis dans le groupe formé par les amidons à teneur élevée en amylose, les dextrines, les maltodextrines et leurs mélanges, pour masquer le goût amer et astringent des matières amères choisies dans le groupe formé par les xanthines, les glycosides phénoliques, les glycosides de flavanoïdes, les chalcones, les glycosides de chalcones et les glycosides de dihydrochalcones, les tannins hydrolysables ou non hydrolysables, les flavones et leurs glycosides, l'acide caféique et ses esters, les matières amères terpénoïdes, les acides aminés, les peptides et les sels métalliques, ainsi que leurs mélanges, en un rapport en poids entre le dérivé d'amidon et la matière amère de 1000:1 à 200:1.
